# EUROPÄISCHE PATENTSCHRIFT

(11) **EP 1 916 275 B1**
(45) Veröffentlichungstag und Bekanntmachung des Hinweises auf die Patenterteilung: **16.05.2012**
(21) Anmeldenummer: 07118690.2
(22) Anmeldetag: 17.10.2007
(51) Int. Cl.: C08K 5/00, C08K 5/053, C08L 23/08, C04B 24/02

(54) **Geminitensid enthaltende Dispersionspulverzusammensetzungen**
Powdery compositions of dispersion polymers comprising gemini surfactants
Compositions de polymères de dispersion en forme de poudre comprenant des tensioactives "gemini"

(30) Priorität: 25.10.2006 DE 102006050336
(43) Veröffentlichungstag der Anmeldung: 30.04.2008
(73) Patentinhaber: Wacker Chemie AG, 81737 München (DE)
(72) Erfinder: Killat, Marion, 84489 Burghausen (DE)
(74) Vertreter: Schuderer, Michael

(56) Entgegenhaltungen:
- EP-A- 0 731 128
- WO-A-2005/121188
- "FOAM DOESN'T STAND A CHANCE AGAINST AIR PRODUCTS' NEWEST SURFYNOL MD-20 MOLECULAR DEFOAMER PRODUCT" AIR PRODUCTS PRESS RELEASES, [Online] 12. November 2003 (2003-11-12), XP002460299 Gefunden im Internet: URL:http://www.airproducts.com/PressRoom/C ompanyNews/Archived/2003/04017_12Nov03.htm > [gefunden am 2007-11-26]
- GALGOCI E. C. ET AL: "INNOVATIVE MOLECULAR DEFOAMER TECHNOLOGY" AIR PRODUCTS AND CHEMICALS,, [Online] 2004, XP002460300 airproducts.com Gefunden im Internet: URL:http://www.airproducts.com/NR/rdonlyre s/74166723-C173-4CED-A6CF-C6F29BB89D84/0/I nnovativeMolecularDefoamerTechnology.pdf> [gefunden am 2007-11-26]

## Beschreibung

Die Erfindung betrifft in Wasser redispergierbare Dispersionspulverzusammensetzungen enthaltend Geminitenside, Verfahren zu deren Herstellung sowie deren Verwendung in Baustoffen, insbesondere in selbstverlaufenden Bodenspachtelmassen und Estrichen.

Polymerisate auf Basis von Vinylestern, Vinylchloriden, (Meth)acrylatmonomeren, Styrol, Butadien und Ethylen werden vor allem in Form von deren wässrigen Dispersionen oder in Wasser redispergierbaren Polymerpulver in vielerlei Anwendungen eingesetzt, beispielsweise als Beschichtungsmittel oder Klebemittel für die unterschiedlichsten Substrate. In Baustoffmassen, beispielsweise auf Basis von Zement oder Gips, werden mit Schutzkolloid stabilisierte Dispersionspulver zur Verbesserung der Haftung, Abriebbeständigkeit, Kratzfestigkeit oder der Biegezugfestigkeit eingesetzt (Tonindustrie-Zeitung, 1985, 9, Seite 698). Solche Dispersionspulver sind beispielsweise in DE-A 2049114 beschrieben und werden durch Sprühtrocknung wässriger Polymerdispersionen unter Zusatz von Polyvinylalkohol und weiterer Additive hergestellt. So erhältliche gut rieselfähige Pulver mit Teilchengrößen zwischen 10 und 250 µm redispergieren in Wasser wieder zu Dispersionen mit Teilchengrößen zwischen 0,1 und 5 µm. Derartige Redispersionen müssen für eine Einsetzbarkeit in oben genannten Anwendungen über einen längeren Zeitraum stabil bleiben, d. h. sie dürfen nicht zum Absitzen neigen.

Ein wichtiges Einsatzgebiet für Dispersionspulver stellen hydraulisch abbindende, selbstverlaufende Bodenspachtelmassen dar. Solche Bodenspachtelmassen sind aus DE-A 3028559 und DE-A 10061410 bekannt und bestehen im allgemeinen aus Zement oder Mischungen verschiedener Zemente, sorgfältig abgestimmten Füllstoffkombinationen, Dispersionspulver, Verflüssiger und gegebenenfalls weiteren Zusätzen. Die selbstverlaufenden Bodenspachtelmassen werden im allgemeinen als Trockenmörtel an die Baustelle geliefert, dort einfach mit Wasser angerührt und auf dem Boden ausgebracht. Die aufgebrachte Schicht verläuft zu einer glatten Oberfläche, die entweder direkt als Nutzschicht oder als Untergrund für weitere Beschichtungen dient. Hierbei kann es insbesondere bei Auftragung dickerer Schichten zu Problemen kommen. Es bilden sich an der Oberfläche des Auftrags Unebenheiten wie Krater, Nadelstiche oder Lufteinschlüsse, die bei Belastung Angriffsflächen für verstärkten Abrieb darstellen. Zur Behebung dieser Mängel ist eine Nachbearbeitung der Oberfläche erforderlich.

Um das Auftreten solcher Unebenheiten zu verhindern, wurden bisher Additive eingesetzt. So wird in EP-A 477900 der Einsatz von vollverseiften Copolymeren aus 1-Alkylvinylestern und Vinylestern empfohlen. Solche Additive sind aber aufwändig herzustellen, was für entsprechende Dispersionspulverformulierungen ökonomisch von erheblichem Nachteil ist.

In EP-B 1133456 ist mit einem Dispersionspulver auf Basis eines Vinylaromat-1,3-Dien-Polymerisats ein alternativer Lösungsweg beschrieben. Bei der Polymerisation dieser Monomere entstehen allerdings flüchtige Nebenprodukte (Diels-Alder-Verbindungen), die während des Herstellungsprozesses nicht vollständig entfernt werden können und deswegen in der Folgezeit während der Verwendung der Dispersionspulver bzw. der Folgeprodukte der Dispersionspulver freigesetzt werden. Dies führt zu einer starken Geruchsbelästigung. Insbesondere bei einer großflächigen Anwendung wie Bodenspachtelmassen ist dies von großem Nachteil.

EP-A-0 731 128 beschreibt die Verwendung von Tetramethyldecyndiol (Surfynol® 104) als Tensid bei der Herstellung von in Wasser redispergierbaren Polymerisatpulvern. Die Polymerisatpulver finden Anwendung u.a. als Modifizierungsmittel für Zemente.

Vor diesem Hintergrund bestand die Aufgabe, alternative Dispersionspulverzusammensetzungen bereitzustellen, die bei Verwendung in Baustoffanwendungen, insbesondere in selbstverlaufenden Bodenspachtelmassen oder Estrichen dem Auftreten von Unebenheiten, Kratern oder Nadelstichen auf der Oberfläche des Auftrags sowie dem Auftreten von Lufteinschlüssen in der Auftragsschicht entgegenwirken.

Gegenstand der Erfindung sind in Wasser redispergierbare Dispersionspulverzusammensetzungen auf Basis von Polymerisaten von einem oder mehreren ethylenisch ungesättigten Monomeren, die ein oder mehrere Geminitenside und Schutzkolloide enthalten.

Geminitenside sind eine besondere Klasse von Tensiden. Ein Geminitensid besteht aus zwei hydrophilen Kopfgruppen, die über einen Spacer verbunden sind und jeweils eine meist hydrophobe Schwanzgruppe tragen.

Geminitenside bieten eine Reihe von Vorteilen gegenüber herkömmlichen Tensiden, bei denen nur eine hydrophile Kopfgruppe an eine hydrophobe Schwanzgruppe gebunden ist. Geminitenside werden als Antischaummittel oder Tenside insbesondere in wasserbasierenden Beschichtungen aller Art eingesetzt (JCT Research, Vol. 3, No.1, S.77-85, 2006; US 3325425; DE-A 10326127, DE-A 102004047118 oder DE-A 19535833).

Bevorzugte Geminitenside sind Alkinderivate enthaltend zwei Alkoholgruppen. Bevorzugte Geminitenside sind auch Alkindiolderivate, bei denen eine oder beide der Alkoholgruppen mit Polyethylenglykolresten substituiert sind. Bevorzugte Geminitenside sind auch Reaktionsprodukte von Epoxiden mit Alkindiolderivaten, wobei eine oder beide der Alkoholgruppen der Alkindiolderivate mit Epoxiden transformiert sein können.

Besonders bevorzugte Geminitenside sind Alkine der allgemeinen Formel (1)

RR¹(R²O)C-C≡C-C(OR²)R¹R (1),

wobei
R und R¹ jeweils für einen linearen oder verzweigten, substituierten oder unsubstituierten Alkyl-, Aryl- oder Alkoxyalkylrest mit 1 bis 10 Kohlenstoffatomen, und
R² für ein Wasserstoffatom oder für eine Polyethylenglykolkette der Formel (-CH₂-CH₂-O)ₙ-CH₂-CH₂-OH mit n = 0 bis 50 stehen.

Alle vorstehenden Symbole der allgemeinen Formel (1) weisen ihre Bedeutungen jeweils unabhängig voneinander auf.

Vorzugsweise bedeutet R einen Kohlenwasserstoffrest mit 1 bis 6 Kohlenstoffatomen, insbesondere Isobutyl, Butyl oder Propyl. Vorzugsweise bedeutet R¹ einen Kohlenwasserstoffrest mit 1 bis 6 Kohlenstoffatomen, insbesondere Methyl oder Ethyl. Vorzugsweise steht R² für ein Wasserstoffatom.

Ein am meisten bevorzugtes Geminitensid ist das Alkindiolder Formel (2), das auch als Surfynol® 104 (Handelsnamen der Firma Air Products) bekannt ist.

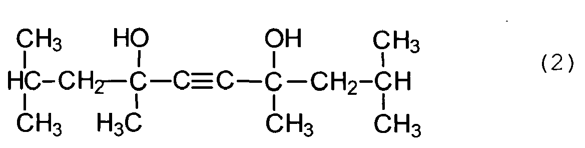

Besonders bevorzugte Geminitenside sind auch Reaktionsprodukte von Epoxiden mit Alkinen der allgemeinen Formel (1), wobei R² jeweils für ein Wasserstoffatom steht und eine oder beide der Alkoholgruppen mit Epoxiden transformiert sein können.
Ganz besonders bevorzugte Geminitenside sind Reaktionsprodukte von Epoxiden der allgemeinen Formel (3) 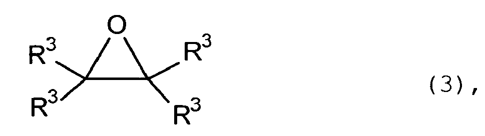 wobei die Reste R³ unabhängig voneinander für Wasserstoffatome oder lineare oder verzweigte, substituierte oder unsubstituierte Alkylreste mit 1 bis 10 Kohlenstoffatomen stehen, mit dem Alkindiolderivat der Formel (2), wobei eine oder beide der Alkoholgruppen des Alkindiolderivates der Formel (2) mit Epoxiden der allgemeinen Formel (3) transformiert sein können.

Besonders bevorzugte Geminitenside sind auch Alkindiolderivate der allgemeinen Formel (4) 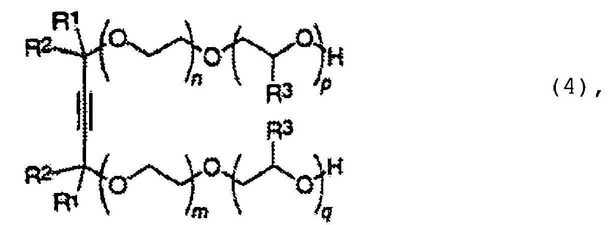 wobei
R¹ für ein Wasserstoffatom oder einen linearen, verzweigten oder cyclischen Alkylrest mit 1 bis 6 Kohlenstoffatomen,
R² für einen linearen, verzeigten oder cyclischen Alkylrest mit 1 bis 12 Kohlenstoffatomen,
R³ für ein Wasserstoffatom oder einen -CH₂OR⁴-Rest,
R⁴ für eine linearen, verzeigten oder cyclischen Alkyl-, Alkenyl-, Aryl- oder Aralalkylrest mit 2 bis 30 Kohlenstoffatomen stehen und
(n + m) einen Durchschnittswert von 1 bis 100 und
(p + q) einen Durchschnittswert von 0,5 bis 5 annehmen.

Vorzugsweise steht in der allgemeinen Formel (4) R¹ für einen Methylrest und R² für einen lineare, verzeigten oder cyclischen Alkylrest mit 1 bis 6 Kohlenstoffatomen. Besonders bevorzugt steht R¹ für einen Methylrest und R² für einen linearen, verzeigten oder cyclischen Alkylrest mit 4 bis 5 Kohlenstoffatomen. Am meisten bevorzugt steht R² für einen Isobutyl- oder Isoamylrest.
R⁴ steht in der allgemeinen Formel (4) bevorzugt für einen linearen, verzeigten oder cyclischen Alkyl-, Alkenyl-, Aryl- oder Aralalkylrest mit 2 bis 30 Kohlenstoffatomen, besonders bevorzugt für einen linearen, verzweigten oder cyclischen Alkyl-, Alkenyl-, Aryl- oder Aralalkylrest mit 4 bis 12 Kohlenstoffatomen. Beispiele für bevorzugte Reste R⁴ sind Ethyl-, Butyl-, Hexyl-, Octyl-, 2-Ethylhexyl-, Dodecyl-, Octadecyl-, Phenyl- oder Cresyl-Reste. Beispiele für besonders bevorzugte Reste R⁴ sind Butyl-, 2-Ethylhexyl- oder Dodecylreste.
(n + m) nehmen bevorzugt Werte von 1 bis 50, besonders bevorzugt Werte von 10 bis 30 an.
(p + q) nehmen bevorzugt Werte von 1 bis 3, besonders bevorzugt einen Wert von 2 an.

Ein am meisten bevorzugtes Geminitensid der allgemeinen Formel (4) ist das Reaktionsprodukt, das entsteht durch Umsetzung von zwei Äquivalenten des [[(2-Ethylhexyl)oxy]methyl] Oxirans mit Polyethylenglykolether mit einem Äquivalent eines Alkindiols der Formel (2). Das letztgenannte Reaktionsprodukt ist auch unter dem Namen Surfynol ® MD-20 (Handelsname der Firma Air Products) bekannt.

Der Anteil der Geminitenside am Gesamtgewicht der Dispersionspulverzusammensetzungen beträgt 0,01 bis 5,00 Gew.-%, bevorzugt 0,1 bis 2,0 Gew.-%, besonders bevorzugt 0,1 bis 0,8 Gew.-%.

Bevorzugte Basispolymerisate für die in Wasser redispergierbaren Dispersionspulverzusammensetzungen sind solche auf Basis von einem oder mehreren ethylenisch ungesättigten Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine oder Diene, Vinylaromaten oder Vinylhalogenide.

Bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Gegebenenfalls können noch 0.05 bis 50 Gew.-%, vorzugsweise 1 bis 10 Gew.-%, bezogen auf das Gesamtgewicht des Basispolymerisats, Hilfsmonomere copolymerisiert werden. Beispiele für Hilfsmonomere sind ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats. Geeignet sind auch epoxidfunktionelle Comonomere wie Glycidylmethacrylat und Glycidylacrylat. Weitere Beispiele sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, wobei als Alkoxygruppen beispielsweise Methoxy-, Ethoxy- und Ethoxypropylenglykolether-Reste enthalten sein können. Genannt seien auch Monomere mit Hydroxy- oder CO-Gruppen, beispielsweise Methacrylsäure- und Acrylsäurehydroxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat.

Weitere Beispiele sind auch Vinylether, wie Methyl-, Ethyl- oder iso-Butylvinylether.

Beispiele für geeignete Homo- und Mischpolymerisate sind Vinylacetat-Homopolymerisate, Mischpolymerisate von Vinylacetat mit Ethylen, Mischpolymerisate von Vinylacetat mit Ethylen und einem oder mehreren weiteren Vinylestern, Mischpolymerisate von Vinylacetat mit Ethylen und Acrylsäureester, Mischpolymerisate von Vinylacetat mit Ethylen und Vinylchlorid, Styrol-Acrylsäureester-Copolymerisate, Styrol-1,3-Butadien-Copolymerisate.

Bevorzugt werden Vinylacetat-Homopolymerisate; Mischpolymerisate von Vinylacetat mit 1 bis 40 Gew.-% Ethylen; Mischpolymerisate von Vinylacetat mit 1 bis 40 Gew.-% Ethylen und 1 bis 50 Gew.-% von einem oder mehreren weiteren Comonomeren aus der Gruppe der Vinylester mit 1 bis 12 C-Atomen im Carbonsäurerest wie Vinylpropionat, Vinyllaurat, Vinylester von alpha-verzweigten Carbonsäuren mit 5 bis 13 C-Atomen wie VeoVa9R, VeoVa10R, VeoVa11R; Mischpolymerisate von Vinylacetat, 1 bis 40 Gew.-% Ethylen und vorzugsweise 1 bis 60 Gew.-% Acrylsäureester von unverzweigten oder verzweigten Alkoholen mit 1 bis 15 C-Atomen, insbesondere n-Butylacrylat oder 2-Ethylhexylacrylat; und Mischpolymerisate mit 30 bis 75 Gew.-% Vinylacetat, 1 bis 30 Gew.-% Vinyllaurat oder Vinylester einer alpha-verzweigten Carbonsäure mit 5 bis 13 C-Atomen, sowie 1 bis 30 Gew.-% Acrylsäureester von unverzweigten oder verzweigten Alkoholen mit 1 bis 15 C-Atomen, insbesondere n-Butylacrylat oder 2-Ethylhexylacrylat, welche noch 1 bis 40 Gew.-% Ethylen enthalten können; Mischpolymerisate mit Vinylacetat, 1 bis 40 Gew.-% Ethylen und 1 bis 60 Gew.-% Vinylchlorid; wobei die Polymerisate jeweils noch die genannten Hilfsmonomere in den genannten Mengen enthalten können, und sich die Angaben in Gew.-% auf jeweils 100 Gew.-% aufaddieren.

Bevorzugt werden auch (Meth)acrylsäureester-Polymerisate, wie Mischpolymerisate von n-Butylacrylat oder 2-Ethylhexylacrylat oder Copolymerisate von Methylmethacrylat mit n-Butylacrylat und/oder 2-Ethylhexylacrylat und gegebenenfalls Ethylen; Styrol-Acrylsäureester-Copolymerisate mit einem oder mehreren Monomeren aus der Gruppe Methylacrylat, Ethylacrylat, Propylacrylat, n-Butylacrylat, 2-Ethylhexylacrylat; Vinylacetat-Acrylsäureester-Copolymerisate mit einem oder mehreren Monomeren aus der Gruppe Methylacrylat, Ethylacrylat, Propylacrylat, n-Butylacrylat, 2-Ethylhexylacrylat und gegebenenfalls Ethylen; Styrol-1,3-Butadien-Copolymerisate; wobei die Polymerisate noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Ein weiterer Gegenstand der vorliegenden Erfindung ist ein Verfahren zur Herstellung der in Wasser redispergierbaren Dispersionspulverzusammensetzungen mittels Emulsionspolymerisation oder Suspensionspolymerisation von einem oder mehreren ethylenisch ungesättigten Monomeren in Anwesenheit eines Schutzkolloids in wässrigem Medium und anschließender Trocknung der dabei erhaltenen wässrigen Dispersionen, dadurch gekennzeichnet, dass ein oder mehrere Geminitenside beigemengt werden.

Vorzugsweise erfolgt die Herstellung der Polymerisate nach dem Emulsionspolymerisationsverfahren. Die Polymerisationstemperatur ist vorzugsweise zwischen 40°C und 100°C, besonders bevorzugt zwischen 60°C und 90°C. Bei der Copolymerisation von gasförmigen Comonomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0.001 bis 0.02 Gew.-%, vorzugsweise 0.001 bis 0.01 Gew.-%, jeweils bezogen auf das Gesamtgewicht der Monomere, eingesetzt.

Als Redox-Initiatoren verwendet man Kombinationen aus den genannten Initiatoren und Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0.001 bis 0.03 Gew.-%, vorzugsweise 0.001 bis 0.015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0.01 bis 5.0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Geeignete Schutzkolloide für die Polymerisation sind Polyvinylalkohole; Polyvinylacetale; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate, Dextrine und Cyclodextrine; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere.

Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung von 1 bis 30 mPas (Methode nach Höppler bei 20°C, DIN 53015). Bevorzugt sind auch teilverseifte, hydrophob modifizierte Polyvinylalkohole mit einem Hydrolysegrad von 80 bis 95 Mol-% und einer Höpplerviskosität, in 4 %-iger wässriger Lösung von 1 bis 30 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, Olefine wie E-then und Decen. Der Anteil der hydrophoben Einheiten beträgt vorzugsweise 0.1 bis 10 Gew.-%, bezogen auf das Gesamtgewicht des teilverseiften Polyvinylalkohols. Es können auch Gemische der genannten Polyvinylalkohole eingesetzt werden.

Am meisten bevorzugt werden Polyvinylalkohole mit einem Hydrolysegrad von 85 bis 94 Mol-% und einer Höpplerviskosität, in 4 %-iger wässriger Lösung von 3 bis 15 mPas (Methode nach Höppler bei 20°C, DIN 53015). Die genannten Schutzkolloide sind mittels des Fachmanns bekannter Verfahren zugänglich und werden im Allgemeinen in einer Menge von insgesamt 1 bis 20 Gew.-%, bezogen auf das Gesamtgewicht der Monomere, bei der Polymerisation zugesetzt.

Wird in Gegenwart von Emulgatoren polymerisiert, beträgt deren Menge 1 bis 5 Gew.-% bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die damit erhältlichen wässrigen Dispersionen haben einen Feststoffgehalt von 30 bis 75 Gew.-%, vorzugsweise von 50 bis 60 Gew.-%.

Gegebenenfalls eignen sich auch wasserunlösliche, filmbildende Polyadditions- und Polykondensationspolymere wie Polyurethane, Polyester, Polyether, Polyamide, Melaminformaldehydharze, Naphthalinformaldehydharze, Phenolformaldehydharze, gegebenenfalls auch in Form ihrer oligomeren Vorprodukte, als Schutzkolloide für die Polymerisation.

Zur Herstellung der in Wasser redispergierbaren Polymerpulver werden die wässrigen Dispersionen, gegebenenfalls nach Zusatz von Schutzkolloiden als Trocknungshilfe, getrocknet, beispielsweise mittels Wirbelschichttrocknung, Gefriertrocknung oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

In der Regel wird die Trocknungshilfe (Schutzkolloid) in einer Gesamtmenge von 3 bis 30 Gew.-%, bezogen auf die polymeren Bestandteile der Dispersion, eingesetzt. Bevorzugt werden 5 bis 20 Gew.-% bezogen auf den Polymeranteil eingesetzt.

Geeignete Trocknungshilfen sind teilverseifte Polyvinylalkohole; Polyvinylpyrrolidone; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Kasein oder Kaseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden keine weiteren Schutzkolloide als Polyvinylalkohole als Trocknungshilfe eingesetzt, wobei die als Schutzkolloide bevorzugten Polyvinylalkohole auch bevorzugt als Trocknungshilfe eingesetzt werden.

Die Geminitenside können vor der Initiierung der Polymerisation mit den ethylenisch ungesättigten Monomeren vermischt werden. Alternativ dazu können die Geminitenside während der Polymerisation der ethylenisch ungesättigten Monomere zugegeben werden. Ebenso kann ein Teil der Geminitenside den ethylenisch ungesättigten Monomeren vor der Initiierung der Polymerisation beigemischt werden und der restliche Teil der Geminitenside während der Polymerisation der ethylenisch ungesättigten Monomere zugegeben werden.

Bevorzugt erfolgt die Zugabe der Geminitenside nach Abschluss der Polymerisation zur entsprechenden Polymerdispersion. Besonders bevorzugt erfolgt die Zugabe der Geminitenside vor der Trocknung der Polymerdispersion. Dazu werden ein oder mehrere Geminitenside den wässrigen Polymerdispersionen zugegeben, um anschließend die so erhaltenen Mischungen entsprechend der oben ausgeführten Verfahren zu trocknen. In einer alternativen besonders bevorzugten Ausführungsform können ein oder mehrere Geminitenside auch während der Trocknung der wässrigen Polymerdispersionen zugegeben werden.

Alternativ dazu können auch die getrockneten Polymerpulver mit einem oder mehreren Geminitensiden vermischt werden.

Bei der Verdüsung zur Trocknung wässriger Polymerdispersionen hat sich vielfach ein Gehalt von bis zu 3 Gew.-% Antischaummittel, bezogen auf das Basispolymerisat, als günstig erwiesen. Zur Erhöhung der Lagerfähigkeit durch Verbesserung der Verblockungsstabilität, insbesondere bei Polymerpulvern mit niedriger Glasübergangstemperatur, kann das erhaltene Polymerpulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäure, Kaoline, Metakaolin, kalziniertes Kaolin, Silicate mit Teilchengrößen vorzugsweise im Bereich von 10 nm bis 100 µm.

Die Viskosität der zu trocknenden Mischung wird über den Feststoffgehalt so eingestellt, dass ein Wert von < 1500 mPas (Brookfield-Viskosität bei 20 Umdrehungen und 23°C), bevorzugt < 500 mPas, erhalten wird. Der Feststoffgehalt der zu trocknenden Mischung beträgt > 35 %, bevorzugt > 40 %.

Zur Verbesserung der anwendungstechnischen Eigenschaften können bei der Trocknung weitere Zusätze zugegeben werden. Weitere, in bevorzugten Ausführungsformen enthaltene Bestandteile von Dispersionspulverzusammensetzungen sind beispielsweise Pigmente, Füllstoffe, Schaumstabilisatoren, Hydrophobierungsmittel oder Zementverflüssiger.

Die in Wasser redispergierbaren Dispersionspulverzusammensetzungen eignen sich insbesondere zum Einsatz in bauchemischen Produkten. Sie können alleine oder in Kombination mit herkömmlichen Polymerdispersionen oder Dispersionspulvern eingesetzt werden, gegebenenfalls in Verbindung mit hydraulisch abbindenden Bindemitteln wie Zementen (Portland-, Aluminat-, Trass-, Hütten-, Magnesia-, Phosphatzement), Gips und Wasserglas für die Herstellung von Verlaufsmassen, Bauklebern, Putzen, Spachtelmassen, Fugenmörteln, Dichtschlämmen oder Farben. Unter Bauklebern sind Fliesenkleber oder Vollwärmeschutzkleber bevorzugte Einsatzgebiete der Dispersionspulverzusammensetzungen. Bevorzugte Anwendungsgebiete für die Dispersionspulverzusammensetzungen sind Verlaufsmassen, besonders bevorzugte Verlaufsmassen sind selbstverlaufende Bodenspachtelmassen und Estriche.

Für die Anwendung in Verlaufsmassen wird die Dispersionspulverzusammensetzung entsprechenden Rezepturen zugemischt. Bevorzugt werden 0,5 bis 10 Gew.-% Dispersionspulverzusammensetzung zugegeben. Die Rezepturen enthalten noch 5 bis 80 Gew.-% anorganische, hydraulisch abbindende Bindemittel wie Zement, Gips oder deren Gemische; bevorzugt wird Zement als Bindemittel eingesetzt. Weiterer Rezepturbestandteil sind 5 bis 80 Gew.-% anorganische Füllstoffe wie Sand, Quarzmehl, Kreide, Kalksteinmehl, Filterasche oder deren Gemische. Zur weiteren Verbesserung der Verlaufseigenschaften können der Trockenmischung gegebenenfalls noch verlaufsfördernde Zusätze wie Kasein oder Zementverflüssiger zugegeben werden. Die Angaben in Gew.-% beziehen sich dabei immer auf 100 Gew.-% Trockenmasse der Rezeptur für die jeweilige Verlaufsmasse. Die gebrauchsfertige Verlaufsmasse erhält man schließlich durch Beigeben von Wasser zur oben genannten Trockenmischung.

Die gebrauchsfertige Verlaufsmasse kann zur Herstellung von selbstnivellierenden Beschichtungen eingesetzt werden. Bevorzugt ist die Verwendung als selbstverlaufende Bodenspachtelmasse oder zur Herstellung von Estrichen.

Durch Auftragen der selbstnivellierenden Beschichtungen können Untergründe geebnet, ausgeglichen oder geglättet werden. Dazu wird die gebrauchsfertige Verlaufsmasse auf entsprechende Untergründe ausgegossen, verteilt und schließlich getrocknet. Im allgemeinen werden Schichtdicken von 0,5 bis 30,0 mm erhalten. Bei der erfindungsgemäßen Vorgehensweise werden aber selbst bei Auftragung von dickeren Schichten, wie beispielsweise bei Schichtdicken von 40,0 mm oder auch 50,0 mm, glatte Oberflächen mit hervorragender mechanischer Festigkeit und Härte erhalten.

Die folgenden Beispiele dienen der detaillierten Erläuterung der Erfindung und sind in keiner Weise als Einschränkung zu verstehen.

### Beispiele:

### Herstellung der Dispersionspulverzusammensetzungen:

Das Pulver wurde hergestellt durch Sprühtrocknung einer Mischung aus einer wässrigen Dispersion eines Ethylen-Vinylacetat-Copolymerisats (FG = 50 %) und 8 Gew.-% eines Polyvinylalkoholes mit einem Verseifungsgrad von 88 Mol-% und einer Viskosität nach Höppler von 4 bis 13 mPas und gegebenenfalls einem Zusatz von 0,4 Gew.-% eines Additivs, wobei sich die Angaben in Gewichtsprozent jeweils auf die eingesetzte Menge des Ethylen-Vinylacetat-Copolymerisats beziehen.

Die Mischung wurde mittels Zweistoffdüse mit 4 bar Zerstäubungspressluft versprüht. Die gebildeten Tropfen wurden mit auf 125°C erhitzter Luft im Gleichstrom getrocknet. Das erhaltene trockene Pulver wurde mit 20 Gew.-% handelsüblichem Antiblockmittel versetzt.

### Beispiel 1:

Dispersionspulverzusammensetzung mit dem Alkindiolderivat der Formel (2) (auch bekannt unter Surfynol® 104 (Handelsnamen der Firma Air Products)) als Additiv.

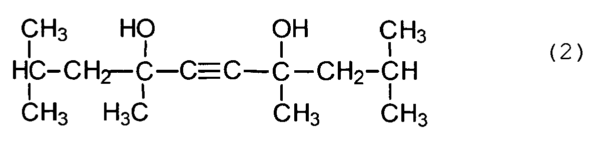

### Beispiel 2:

Dispersionspulverzusammensetzung mit Surfynol ® MD-20 (Handelsname der Firma Air Products) als Additiv. Surfynol ® MD-20 ist das Reaktionsprodukt von zwei Äquivalenten des Oxirans [[(2-Ethylhexyl)oxy]methyl] mit Polyethylenglykolether mit einem Äquivalent des Alkindiolderivates der Formel (2).

### Vergleichsbeispiel 3:

Dispersionspulverzusammensetzung mit Silfoam ® SD 860 (Handelsname der Firma Wacker Chemie) als Additiv. Silfoam ® SD 860 ist ein selbstdispergierendes Silicon-Antischaummittel auf Basis organischer Komponenten mit geringen Anteilen eines organofunktionellen Siliconöls.

### Vergleichsbeispiel 4:

Dispersionspulverzusammensetzung ohne Zusatz eines Additivs.

Im Zuge der Ausprüfung wurden die Pulvereigenschaften der gemäß den Beispielen 1-2 und Vergleichsbeispielen 3-4 erhaltenen Dispersionspulverzusammensetzungen bestimmt (s. Tabelle 1) sowie ihre Verarbeitungs- und Oberflächeneigenschaften in selbstverlaufenden Bodenspachtelmassen untersucht (s. Tabelle 2).

### Bestimmung der Blockfestigkeit (BF):

Zur Bestimmung der Blockfestigkeit wurde das zu untersuchende Pulver in ein Eisenrohr mit Verschraubung gefüllt und danach mit einem Metallstempel belastet. Unter Belastung wurde im Trockenschrank 16 Stunden bei 50°C gelagert. Nach dem Abkühlen auf Raumtemperatur wurde das Pulver aus dem Rohr entfernt und die Blockstabilität qualitativ durch Zerdrücken des Pulvers bestimmt (s. Tabelle 1).
Die Blockstabilität wurde wie folgt klassifiziert:
1 = sehr gute Blockstabilität
2 = gute Blockstabilität
3 = befriedigende Blockstabilität
4 = nicht blockstabil, Pulver nach Zerdrücken nicht mehr rieselfähig.

### Bestimmung des Absitzverhaltens (RA):

Das Absitzverhalten von Redispersionen dient als Maß für die Redispergierbarkeit von redispergierbaren Pulvern. Das zu untersuchende Pulver wurde in einer Konzentration von 50 Gew.-% in Wasser durch Einwirkung von starken Scherkräften redispergiert.
Das Absitzverhalten wurde dann an verdünnten Redispersionen (0.5 % Festgehalt) bestimmt, und dazu 100 ml dieser Dispersion in eine graduierte Röhre gefüllt, und die Absitzhöhe an Feststoff gemessen. Die Angabe erfolgt in mm Absitz nach 24 Stunden. Werte größer 7 zeigen eine unzureichende Redispersion des Pulvers an (s. Tabelle 1).

Zur anwendungstechnischen Prüfung wurden Bodenspachtelmassen folgender Zusammensetzung eingesetzt:

| | |
|---|---|
| Portlandzement | 20 Gew.-% |
| EFA-Filler (Elektrofilterasche-Füllstoff) | 4 Gew.-% |
| Quarzsand | 50 Gew.-% |
| Calciumcarbonat-Füllstoff | 22,7 Gew.-% |
| Kasein | 0,3 Gew.-% |

und gegebenenfalls die in den (Vergleichs-)Beispielen genannten Zusatzstoffe

Aus den aufgelisteten Bestandteilen der Bodenspachtelmasse und den in den (Vergleichs-)Beispielen genannten Zusatzstoffen wurde durch intensives Mischen eine Trockenmischung hergestellt.
Die Trockenmischung wurde mit Wasser versetzt (16-18 Gew.-% Wasser auf 100 Gew.-% Trockenmischung) und intensiv vermischt.
Der so erhaltene Mörtel wurde auf eine Folie in 4 mm Schichtdicke vergossen.

### Beispiel 5:

Bodenspachtelmasse mit der Dispersionspulverzusammensetzung aus Beispiel 1 als Zusatzstoff (3 Gew.-% bezogen auf die Gesamtmasse der Bodenspachtelmasse).

### Beispiel 6:

Bodenspachtelmasse mit der Dispersionspulverzusammensetzung aus Beispiel 2 als Zusatzstoff (3 Gew.-% bezogen auf die Gesamtmasse der Bodenspachtelmasse).

### Vergleichsbeispiel 7:

Bodenspachtelmasse mit der Dispersionspulverzusammensetzung aus Vergleichsbeispiel 3 als Zusatzstoff (3 Gew.-% bezogen auf die Gesamtmasse der Bodenspachtelmasse).

### Vergleichsbeispiel 8:

Bodenspachtelmasse mit der Dispersionspulverzusammensetzung aus Vergleichsbeispiel 4 als Zusatzstoff (3 Gew.-% bezogen auf die Gesamtmasse der Bodenspachtelmasse).

### Vergleichsbeispiel 9:

Bodenspachtelmasse mit 2,988 Gew.-% Dispersionspulverzusammensetzung aus Vergleichsbeispiel 4 und 0,012 Gew.-% des Alkindiolderivates der Formel (2) (75%ig auf Trägermaterial; auch bekannt unter dem Handelsnamen Surfynol ® 104 der Firma Air Products) als Zusatzstoffe, wobei sich die Angaben in Gewichtsprozent auf die Gesamtmasse der Bodenspachtelmasse beziehen.

### Vergleichsbeispiel 10:

Bodenspachtelmasse mit 2,988 Gew.-% Dispersionspulverzusammensetzung aus Vergleichsbeispiel 4 und 0,012 Gew.-% Surfynol ® MD-20 (Handelsname der Firma Air Products) als Zusatzstoffe, wobei sich die Angaben in Gewichtsprozent auf die Gesamtmasse der Bodenspachtelmasse beziehen. Surfynol ® MD-20 ist das Reaktionsprodukt von zwei Äquivalenten des Oxirans [[(2-Ethylhexyl)oxy]methyl] mit Polyethylenglykolether mit einem Äquivalent des Alkindiolderivates der Formel (2).

### Vergleichsbeispiel 11:

Bodenspachtelmasse mit 0,12 Gew.-% Surfynol ® MD-20 als Zusatzstoff, wobei sich die Angabe in Gewichtsprozent auf die Gesamtmasse der Bodenspachtelmasse bezieht. Surfynol ® MD-20 ist das Reaktionsprodukt von zwei Äquivalenten des Oxirans [[(2-Ethylhexyl)oxy]methyl] mit Polyethylenglykolether mit einem Äquivalent des Alkindiolderivates der Formel (2).

### Vergleichsbeispiel 12:

Bodenspachtelmasse ohne jeglichen Zusatzstoff.

### Prüfung der Oberflächenbeschaffenheit (OB):

Die Beurteilung erfolgte visuell mit folgender Bewertungsskala:
1 = sehr glatt, ohne Krater und Nadelstiche
2 = sehr glatt, ohne Krater, wenige Nadelstiche
3 = glatt, wenige Krater, viele Nadelstiche
4 = glatt, einige Krater, viele Nadelstiche

### Prüfung der Härte und Kratzfestigkeit (HK):

Die Härte und Kratzfestigkeit wurde durch Kratzen mit dem Messer geprüft. Dies gibt zugleich eine Information über die Verschleißfestigkeit der Spachtelmasse.
Bewertungsskala:
1 = sehr hart, sehr fester Verbund, sehr kratzfest
2 = hart, fester Verbund, kratzfest
3 = mäßig hart, mäßiger Verbund, mäßig kratzfest
4 = mäßig hart, schlechter Verbund, wenig kratzfest

Die Ergebnisse der Prüfung der Blockfestigkeit BF und des Absitzverhaltens RA der Dispersionspulverzusammensetzungen bzw. Dispersionspulver sind in Tabelle 1 zusammengefasst, die Ergebnisse der Oberflächenbeschaffenheit OB sowie der Härte und Kratzfestigkeit HK der Mörtel sind in Tabelle 2 zusammengefasst.

**Tabelle 1: Dispersionspulverzusammensetzungen:**

| Beispiel | Additiv | BF | RA |
|---|---|---|---|
| 1 | Surfynol ® 104 | 2-3 | 1,9 |
| 2 | Surfynol ® MD-20 | 1-2 | 1,8 |
| Vergleichs-beispiel | | | |
| 3 | Silfoam ® SD 860 | 2 | 1,7 |
| 4 | - | 2 | 2,2 |

Aus Tabelle 1 geht hervor, dass die Pulvereigenschaften der Dispersionspulverzusammensetzung (Tabelle 1, Beispiele 1 bis 2) und die entsprechenden Eigenschaften von Standardprodukten (Tabelle 1, Vergleichsbeispiele 3 bis 4) auf einem vergleichbar hohen Niveau sind.

Die anwendungstechnischen Eigenschaften der erfindungsgemäßen Bodenspachtelmassen (Tabelle 2, Beispiele 5 bis 6) sind aber deutlich besser als die entsprechenden Eigenschaften von Bodenspachtelmassen enthaltend Dispersionspulverzusammensetzungen mit herkömmlichen Zusatzstoffen (Tabelle 2, Vergleichsbeispiel 7) oder ohne Additive (Tabelle 2, Vergleichsbeispiel 8). Bei direkter Zugabe der Geminitenside bei der Herstellung der Trockenmischung (Tabelle 2, Vergleichsbeispiele 9 und 10) werden die anwendungstechnischen Eigenschaften der erfindungsgemäßen Bodenspachtelmassen (Tabelle 2, Beispiele 5 bis 6) nicht erreicht.

In allen Fällen, in denen dem Mörtel kein Dispersionspulver zugesetzt wurde, wurden Mörtel mit sehr unbefriedigenden Oberflächeneigenschaften und Härten erhalten (Tabelle 2, Vergleichsbeispiele 11 bis 12). Besonders unbefriedigend waren die anwendungstechnischen Eigenschaften im Falle des in Vergleichsbeispiel 12 (Tabelle 2) beschriebenen Mörtels, der weder Dispersionspulver noch ein Geminitensid enthielt.

**Tabelle 2: Selbstverlaufende Bodenspachtelmassen:**

| Beispiel | Pulver aus Beispiel | OB | HK |
|---|---|---|---|
| 5 | 1 | 2 | 3 |
| 6 | 2 | 2 | 2 |

| Vergleichsbeispiel | Pulver aus Vergleichsbeispiel | | |
|---|---|---|---|
| 7 | 3 | 3 | 2-4 |
| 8 | 4 | 4 | 4 |
| 9^{a)} | 4 | 3 | 3 |
| 10^{b)} | 4 | 3 | 3 |
| 11^{b)} | - | 3 | 3 |
| 12 | - | 4 | 3-4 |

| | | | |
|---|---|---|---|
| ^{a)} Der Selbstverlaufenden Bodenspachtelmasse wurde Surfynol ® 104 zugesetzt. ^{b)} Der Selbstverlaufenden Bodenspachtelmasse wurde Surfynol ® MD-20 zugesetzt. | | | |

## Patentansprüche

1. In Wasser redispergierbare Dispersionspulverzusammensetzung auf Basis von Polymerisaten von einem oder mehreren ethylenisch ungesättigten Monomeren, die ein oder mehrere Geminitenside und Schutzkolloide enthält.

2. Dispersionspulverzusammensetzung nach Anspruch 1, **dadurch gekennzeichnet, dass** Polymerisate auf Basis von einem oder mehreren ethylenisch ungesättigten Monomeren ausgewählt aus der Gruppe umfassend Vinylester von unverzweigten oder verzweigten Alkylcarbonsäuren mit 1 bis 15 C-Atomen oder Ester der Methacrylsäure oder Acrylsäure und unverzweigten oder verzweigten Alkoholen mit 1 bis 15 C-Atomen, Vinylaromaten, Olefine, Diene oder Vinylhalogenide eingesetzt werden.

3. Dispersionspulverzusammensetzung nach Anspruch 1 bis 2, **dadurch gekennzeichnet, dass** Polymerisate auf Basis von einem oder mehreren ethylenisch ungesättigten Monomeren ausgewählt aus der Gruppe umfassend Vinylacetat, oder Vinylacetat und Ethylen, oder Vinylacetat und Vinylester von α-verzweigten Monocarbonsäuren mit 5 bis 13 C-Atomen, oder Vinylacetat und VeoVa9^{R} und gegebenenfalls Ethylen, oder Vinylacetat und VeoVa10^{R} und gegebenenfalls Ethylen, oder Vinylacetat und Vinyllaurat und gegebenenfalls Ethylen, oder Ethylen und Vinylester von α-verzweigten Monocarbonsäuren mit 5 bis 13 C-Atomen eingesetzt werden.

4. Dispersionspulverzusammensetzung nach Anspruch 1 bis 2, **dadurch gekennzeichnet, dass** Polymerisate auf Basis von einem oder mehreren ethylenisch ungesättigten Monomeren ausgewählt aus der Gruppe umfassend Ethylacrylat, Ethylmethacrylat, Propylacrylat, Propylmethacrylat, n-, iso- oder t-Butylmethacrylat, Methylacrylat, Methylmethacrylat, n-, iso- oder t-Butylacrylat, 2-Ethylhexylacrylat oder Norbornylacrylat eingesetzt werden.

5. Dispersionspulverzusammensetzung nach Anspruch 1 bis 4, **dadurch gekennzeichnet, dass** als Geminitenside Alkindiolderivate eingesetzt werden.

6. Dispersionspulverzusammensetzung nach Anspruch 1 bis 4, **dadurch gekennzeichnet, dass** als Geminitenside Alkindiolderivate eingesetzt werden, bei denen eine oder beide der Alkoholgruppen mit Polyethylenglykolresten substituiert sind.

7. Dispersionspulverzusammensetzung nach Anspruch 1 bis 4, **dadurch gekennzeichnet, dass** als Geminitenside Reaktionsprodukte von Epoxiden mit Alkindiolderivaten eingesetzt werden, wobei eine oder beide der Alkoholgruppen der Alkindiolderivate mit Epoxiden transformiert sein können.

8. Dispersionspulverzusammensetzung nach Anspruch 1 bis 7, **dadurch gekennzeichnet, dass** als Geminitenside Alkinderivate der allgemeinen Formel (1)
RR¹(R²O) C-C≡C-C(OR²) R¹R (1) eingesetzt werden, wobei R und R¹ jeweils für einen linearen oder verzweigten, substituierten oder unsubstituierten Alkyl-, Aryl- oder Alkoxyalkylrest mit 1 bis 10 Kohlenstoffatomen, und
R² für ein Wasserstoffatom oder eine Polyethylenglykolkette der Formel (-CH₂-CH₂-O)ₙ-CH₂-CH₂-OH mit n = 0,5 bis 50 stehen,
wobei die einzelnen Reste R, R¹ und R² ihre Bedeutung jeweils unabhängig voneinander einnehmen können.

9. Dispersionspulverzusammensetzungen nach Anspruch 8, **dadurch gekennzeichnet, dass** als Geminitenside Alkinderivate der allgemeinen Formel (1) eingesetzt, wobei
R einen Isobutyl-, Butyl- oder Propylrest und R¹ einen Methyl- oder Ethylrest bedeuten.

10. Dispersionspulverzusammensetzung nach Anspruch 1 bis 4, **dadurch gekennzeichnet, dass** als Geminitenside das Alkindiol der Formel (2) 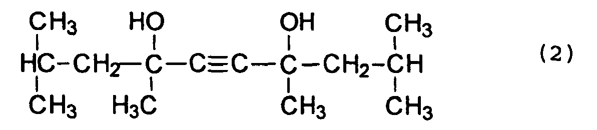 oder Surfynol^{®} MD-20, das Reaktionsprodukt von zwei Äquivalenten des [[(2-Ethylhexyl)oxy]methyl] Oxirans mit Polyethylenglykolether mit einem Äquivalent Alkindiol der Formel (2) eingesetzt werden.

11. Dispersionspulverzusammensetzung nach Anspruch 1 bis 10, **dadurch gekennzeichnet, dass** der Anteil der Geminitenside am Gesamtgewicht der Dispersionspulverzusammensetzungen 0,01 bis 5,00 Gew.-% beträgt.

12. Verfahren zur Herstellung der in Wasser redispergierbaren Dispersionspulverzusammensetzungen mittels Emulsionspolymerisation oder Suspensionspolymerisation von einem oder mehreren ethylenisch ungesättigten Monomeren in Anwesenheit eines Schutzkolloids in wässrigem Medium und anschließender Trocknung der dabei erhaltenen wässrigen Dispersionen, **dadurch gekennzeichnet, dass** ein oder mehrere Geminitenside beigemengt werden.

13. Verfahren zur Herstellung von Dispersionspulverzusammensetzungen nach Anspruch 12, **dadurch gekennzeichnet, dass** ein oder mehrere Geminitenside mit einem oder mehreren ethylenisch ungesättigten Monomeren vermischt werden und die ethylenisch ungesättigten Monomere anschließend polymerisiert werden.

14. Verfahren zur Herstellung von Dispersionspulverzusammensetzungen nach Anspruch 12, **dadurch gekennzeichnet, dass** ein oder mehrere ethylenisch ungesättigte Monomere polymerisiert werden und währenddessen ein oder mehrere Geminitenside zugegeben werden.

15. Verfahren zur Herstellung von Dispersionspulverzusammensetzungen nach Anspruch 12, **dadurch gekennzeichnet, dass** ein oder mehrere Geminitenside mit getrocknetem Polymerpulver vermischt werden.

16. Verfahren zur Herstellung von Dispersionspulverzusammensetzungen nach Anspruch 12, **dadurch gekennzeichnet, dass** ein oder mehrere Geminitenside mit wässrigen Polymerdispersionen vermischt werden und die so erhaltenen Mischungen getrocknet werden.

17. Verfahren zur Herstellung von Dispersionspulverzusammensetzungen nach Anspruch 12, **dadurch gekennzeichnet, dass** wässrige Polymerdispersionen getrocknet werden und währenddessen ein oder mehrere Geminitenside zugegeben werden.

18. Verwendung von Dispersionspulverzusammensetzungen aus Anspruch 1 bis 11, in bauchemischen Produkten.

19. Verwendung von Dispersionspulverzusammensetzungen aus Anspruch 1 bis 11, in Verlaufsmassen, Bauklebern, Fliesenklebern, Vollwärmeschutzklebern, Putzen, Spachtelmassen, Fugenmörteln, Dichtschlämmen oder Farben.

20. Verwendung von Dispersionspulverzusammensetzungen aus Anspruch 1 bis 11, in selbstverlaufenden Bodenspachtelmassen oder Estrichen.

## Claims

1. Water-redispersible dispersion powder composition based on polymers of one or more ethylenically unsaturated monomers, which composition contains one or more gemini surfactants and protective colloids.

2. Dispersion powder composition according to Claim 1, **characterized in that** polymers based on one or more ethylenically unsaturated monomers selected from the group consisting of vinyl esters of unbranched or branched alkylcarboxylic acids having from 1 to 15 carbon atoms and esters of methacrylic acid or acrylic acid with unbranched or branched alcohols having from 1 to 15 carbon atoms, vinylaromatics, olefins, dienes and vinyl halides are used.

3. Dispersion powder composition according to Claim 1 or 2, **characterized in that** polymers based on one or more ethylenically unsaturated monomers selected from the group consisting of vinyl acetate, vinyl acetate together with ethylene, vinyl acetate together with vinyl esters of α-branched monocarboxylic acids having from 5 to 13 carbon atoms, vinyl acetate together with VeoVa9^{R} and, if appropriate, ethylene, vinyl acetate together with VeoVa10^{R} and, if appropriate, ethylene, vinyl acetate together with vinyl laurate and, if appropriate, ethylene, and ethylene together with vinyl esters of α-branched monocarboxylic acids having from 5 to 13 carbon atoms are used.

4. Dispersion powder composition according to Claim 1 or 2, **characterized in that** polymers based on one or more ethylenically unsaturated monomers selected from the group consisting of ethyl acrylate, ethyl methacrylate, propyl acrylate, propyl methacrylate, n-butyl, isobutyl or t-butyl methacrylate, methyl acrylate, methyl methacrylate, n-butyl, isobutyl or t-butyl acrylate, 2-ethylhexyl acrylate and norbornyl acrylate are used.

5. Dispersion powder composition according to any of Claims 1 to 4, **characterized in that** alkynediol derivatives are used as gemini surfactants.

6. Dispersion powder composition according to any of Claims 1 to 4, **characterized in that** alkynediol derivatives in which one or both of the alcohol groups are substituted by polyethylene glycol radicals are used as gemini surfactants.

7. Dispersion powder composition according to any of Claims 1 to 4, **characterized in that** reaction products of epoxides with alkynediol derivatives, in which one or both of the alcohol groups of the alkynediol derivatives can have been transformed by means of epoxides, are used as gemini surfactants.

8. Dispersion powder composition according to any of Claims 1 to 7, **characterized in that** alkyne derivatives of the general formula (1)
RR¹(R²O)C-C≡C-C (OR²) R¹R (1),
where
R and R¹ are each a linear or branched, substituted or unsubstituted alkyl, aryl or alkoxyalkyl radical having from 1 to 10 carbon atoms and
R² is a hydrogen atom or a polyethylene glycol chain of the formula (-CH₂-CH₂-O)ₙ-CH₂-CH₂-OH where n = 0.5 to 50,
with the individual radicals R, R¹ and R² each being able to have their meanings independently of one another,
are used as gemini surfactants.

9. Dispersion powder compositions according to Claim 8, **characterized in that** alkyne derivatives of the general formula (1) in which
R is an isobutyl, butyl or propyl radical and R¹ is a methyl or ethyl radical are used as gemini surfactants.

10. Dispersion powder composition according to any of Claims 1 to 4, **characterized in that** the alkynediol of the formula (2) 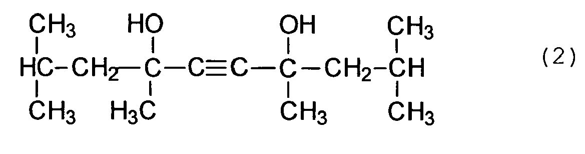 or Surfynol ® MD-20, the reaction product of two equivalents of [[(2-ethylhexyl)oxy]methyl]oxirane with polyethylene glycol ether with one equivalent of alkynediol of the formula (2), is used as gemini surfactant.

11. Dispersion powder composition according to any of Claims 1 to 10, **characterized in that** the proportion of gemini surfactants based on the total weight of the dispersion powder compositions is from 0.01 to 5.00% by weight.

12. Process for producing the water-redispersible dispersion powder compositions by means of emulsion polymerization or suspension polymerization of one or more ethylenically unsaturated monomers in the presence of a protective colloid in an aqueous medium and subsequent drying of the aqueous dispersions obtained, **characterized in that** one or more gemini surfactants are added.

13. Process for producing dispersion powder compositions according to Claim 12, **characterized in that** one or more gemini surfactants are mixed with one or more ethylenically unsaturated monomers and the ethylenically unsaturated monomers are subsequently polymerized.

14. Process for producing dispersion powder compositions according to Claim 12, **characterized in that** one or more ethylenically unsaturated monomers are polymerized and one or more gemini surfactants are added during this.

15. Process for producing dispersion powder compositions according to Claim 12, **characterized in that** one or more gemini surfactants are mixed with dried polymer powder.

16. Process for producing dispersion powder compositions according to Claim 12, **characterized in that** one or more gemini surfactants are mixed with aqueous polymer dispersions and the mixtures obtained in this way are dried.

17. Process for producing dispersion powder compositions according to Claim 12, **characterized in that** aqueous polymer dispersions are dried and one or more gemini surfactants are added during this.

18. Use of dispersion powder compositions as set forth in any of Claims 1 to 11 in building chemical products.

19. Use of dispersion powder compositions as set forth in any of Claims 1 to 11 in flow compositions, building adhesives, tile adhesives, thermal insulation adhesives, plasters and renders, knifing fillers, jointing mortars, sealing slurries or paints.

20. Use of dispersion powder compositions as set forth in any of Claims 1 to 11 in self-leveling flooring compositions or screeds.

## Revendications

1. Composition de poudre en dispersion, redispersible dans l'eau, à base de polymères d'un ou de plusieurs monomères éthyléniquement insaturés, qui contient un ou plusieurs agents tensioactifs géminés et colloïdes de protection.

2. Composition de poudre en dispersion selon la revendication 1, **caractérisée en ce qu'**on utilise des polymères à base d'un ou de plusieurs monomères éthyléniquement insaturés, choisis dans le groupe comprenant les esters vinyliques d'acides alkylcarboxyliques non ramifiés ou ramifiés, comprenant 1 à 15 atomes de carbone et les esters de l'acide méthacrylique ou acrylique et d'alcools non ramifiés ou ramifiés, comprenant 1 à 15 atomes de carbone, les aromatiques de vinyle, les oléfines, les diènes ou les halogénures de vinyle.

3. Composition de poudre en dispersion selon les revendications 1 et 2, **caractérisée en ce qu'**on utilise des polymères à base d'un ou de plusieurs monomères éthyléniquement insaturés choisis dans le groupe comprenant l'acétate de vinyle, ou l'acétate de vinyle et l'éthylène, ou l'acétate de vinyle et les esters vinyliques d'acides monocarboxyliques ramifiés en position α comprenant 5 à 13 atomes de carbone, ou l'acétate de vinyle et le VeoVa9^{R} et le cas échéant l'éthylène, ou l'acétate de vinyle et le VeoVa10^{R} et le cas échéant l'éthylène, ou l'acétate de vinyle et le laurate de vinyle et le cas échéant l'éthylène, ou l'éthylène et les esters vinyliques d'acides monocarboxyliques ramifiés en position α comprenant 5 à 13 atomes de carbone.

4. Composition de poudre en dispersion selon les revendications 1 et 2, **caractérisée en ce qu'**on utilise des polymères à base d'un ou de plusieurs monomères éthyléniquement insaturés choisis dans le groupe comprenant l'acrylate d'éthyle, le méthacrylate d'éthyle, l'acrylate de propyle, le méthacrylate de propyle, le méthacrylate de n-butyle, d'isobutyle ou de t-butyle, l'acrylate de méthyle, le méthacrylate de méthyle, l'acrylate de n-butyle, d'isobutyle ou de t-butyle, l'acrylate de 2-éthylhexyle ou l'acrylate de norbornyle.

5. Composition de poudre en dispersion selon les revendications 1 à 4, **caractérisée en ce qu'**on utilise, comme agents tensioactifs géminés, des dérivés d'alcynediols.

6. Composition de poudre en dispersion selon les revendications 1 à 4, **caractérisée en ce qu'**on utilise comme agents tensioactifs géminés des dérivés d'alcynediols, dans lesquels un ou les deux groupes alcools sont substitués par des radicaux polyéthylèneglycol.

7. Composition de poudre en dispersion selon les revendications 1 à 4, **caractérisée en ce qu'**on utilise comme agents tensioactifs géminés des produits de réaction d'époxydes avec des dérivés d'alcynediols, un ou les deux groupes alcools des dérivés d'alcynediols pouvant être transformés avec des époxydes.

8. Composition de poudre en dispersion selon les revendications 1 à 7, **caractérisée en ce qu'**on utilise comme agents tensioactifs géminés des dérivés d'alcyne de formule générale (1)
RR¹(R²O) C-C≡C-C(OR²)R¹R (1)
où
R et R¹ représentent chacun un radical alkyle, aryle ou alcoxyalkyle linéaire ou ramifié, substitué ou non substitué, comprenant 1 à 10 atomes de carbone, et
R² représente un atome d'hydrogène ou une chaîne polyéthylèneglycol de formule (-CH₂-CH₂-O)ₙ-CH₂-CH₂- OH avec n = 0,5 à 50,
les différents radicaux R, R¹ et R² pouvant présenter à chaque fois leur signification indépendamment les uns des outres.

9. Compositions de poudre en dispersion selon la revendication 8, **caractérisées en ce qu'**on utilise comme agents tensioactifs géminés des dérivés d'alcyne de formule générale (1), où
R signifie un radical isobutyle, butyle ou propyle et
R¹ signifie un radical méthyle ou éthyle.

10. Composition de poudre en dispersion selon les revendications 1 à 4, **caractérisée en ce qu'**on utilise comme agents tensioactifs géminés l'alcynediol de formule (2) 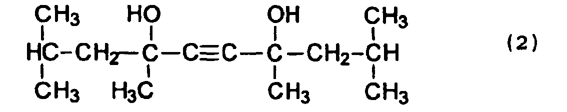 ou le Surfynol® MD-20, le produit de réaction de deux équivalents de [[(2-éthylhexyl)oxy]méthyl]oxyrane avec du polyéthylèneglycoléther avec un équivalent d'alcynediol de formule (2).

11. Composition de poudre en dispersion selon les revendications 1 à 10, **caractérisée en ce que** la proportion d'agents tensioactifs géminés par rapport au poids total des compositions de poudre en dispersion est de 0,01 à 5,00% en poids.

12. Procédé pour la préparation des compositions de poudre en dispersion, redispersibles dans l'eau, par polymérisation en émulsion ou en suspension d'un ou de plusieurs monomères éthyléniquement insaturés en présence d'un colloïde de protection en milieu aqueux et séchage consécutif des dispersions aqueuses ainsi obtenues, **caractérisé en ce qu'**un ou plusieurs agents tensioactifs géminés sont mélangés.

13. Procédé pour la préparation de compositions de poudre en dispersion selon la revendication 12, **caractérisé en ce qu'**un ou plusieurs agents tensioactifs géminés sont mélangés avec un ou plusieurs monomères éthyléniquement insaturés et les monomères éthyléniquement insaturés sont ensuite polymérisés.

14. Procédé pour la préparation de compositions de poudre en dispersion selon la revendication 12, **caractérisé en ce qu'**un ou plusieurs monomères éthyléniquement insaturés sont polymérisés et un ou plusieurs agents tensioactifs géminés sont ajoutés pendant cette polymérisation.

15. Procédé pour la préparation de compositions de poudre en dispersion selon la revendication 12, **caractérisé en ce qu'**un ou plusieurs agents tensioactifs géminés sont mélangés avec de la poudre de polymère séchée.

16. Procédé pour la préparation de compositions de poudre en dispersion selon la revendication 12, **caractérisé en ce qu'**un ou plusieurs agents tensioactifs géminés sont mélangés avec des dispersions aqueuses de polymère et les mélanges ainsi obtenus sont séchés.

17. Procédé pour la préparation de compositions de poudre en dispersion selon la revendication 12, **caractérisé en ce que** les dispersions aqueuses de polymère sont séchées et un ou plusieurs agents tensioactifs géminés sont ajoutés pendant ce séchage.

18. Utilisation de compositions de poudre en dispersion selon les revendications 1 à 11 dans des produits chimiques destinés à la construction.

19. Utilisation de compositions de poudre en dispersion selon les revendications 1 à 11, dans des masses d'étalement, des adhésifs pour la construction, des colles pour carrelage, des adhésifs pour l'isolation thermique poussée, des crépis, des enduits, des mélanges pour joints, des suspensions d'étanchéité ou des encres.

20. Utilisation de compositions de poudre en dispersion selon les revendications 1 à 11 dans des enduits pour sol autolissants ou des chapes autolissantes.
